# EUROPEAN PATENT APPLICATION

(11) **EP 3 142 376 A1**
(43) Date of publication of application: **15.03.2017**
(21) Application number: 16187464.9
(22) Date of filing: 06.09.2016
(51) Int. Cl.: H04N 21/4385, H04N 21/845

(54) **INFORMATION DEVICE**

(30) Priority: 08.09.2015 JP 2015176648
(71) Applicant: Funai Electric Co., Ltd., Daito Osaka 574-0013 (JP)
(72) Inventor: TOYA, Takehiro, Daito, Osaka 574-0013 (JP); IMOTO, Yoshinobu, Daito, Osaka 574-0013 (JP)
(74) Representative: Global IP Europe Patentanwaltskanzlei

(57) **Abstract**

An information device is basically provided that comprises a communication component, a controller, a memory, and an application. The communication component is configured to communicate with an external device. The controller is configured to download video data from the external device via the communication component, and is configured to produce distribution data of the same format as the video data from the video data. The memory is configured to store the distribution data. The application includes a local server and a playback component, and is configured to play the distribution data. The controller is configured to execute the application, and is configured to send the distribution data stored in the memory from the local server to the playback component.

## Description

### Field of the Invention

The present invention generally relates to an information device. More specifically, the present invention relates to an information device with a communication component.

### Background

Information devices with a communication component is conventionally known in the art (see JP 2003-288290 A, for example).
JP 2003-288290 A discloses an information device that communicates with a content distribution server for distributing streaming content or other such data. This information device is configured to receive (download) streaming content or other such data from the content distribution server.

### Summary

However, with the information device discussed in JP 2003-288290 A, a problem is that when streaming video data (in transport stream format) of a television broadcast is downloaded via a communication component, the playback software of the information device cannot play the video data in transport stream format unless the video data is converted to a specific format, such as MP4 (or MPEG-4 Part 14).

One object of this disclosure is to provide an information device with which video data downloaded in transport stream format can be played without being converted to another format. The above object is achieved by an information device having features placed in the appended claim 1. Further advantageous effects can be achieved by the appended dependent claims.
[1] In view of the state of the known technology and in accordance with a first aspect of the present invention, an information device is provided that comprises a communication component, a controller, a memory, and an application. The communication component is configured to communicate with an external device. The controller is configured to download video data from the external device via the communication component. The controller is configured to produce distribution data of the same format as the video data from the video data. The memory is configured to store the distribution data. The application includes a local server and a playback component, and is configured to play the distribution data. The controller is configured to execute the application. The controller is configured to send the distribution data stored in the memory from the local server to the playback component.
   With the information device as discussed above, the controller is configured to download the video data from the external device via the communication component. The controller is configured to produce the distribution data of the same format (transport stream format, etc.) as the video data from the downloaded video data. The controller is configured to function as the application for playing the distribution data. In other words, the controller is configured to constitute an application component for playing the distribution data. The controller is configured to constitute the local server in the application. The controller is configured to send the distribution data stored in the memory from the local server to the playback component in the application component.
   Consequently, the pseudo-transmission (streaming) of video is performed from the local server using the application by producing the distribution data of the same format from the video data in the transport stream format that is downloaded by the communication component. Thus, streaming playback can be performed without converting the video data downloaded in the transport stream format into another format in the information device. Also, since there is no need to convert the video data, the user does not have to go to the trouble of carrying out this video data conversion. Also, if the download of the video data from the external device is performed simultaneously with the video playback, since there is no need to perform the conversion of the video data and the video playback simultaneously, the load to which the controller is subjected is lighter. Also, the video data in the transport stream format can be played in the same format by executing the application. Thus, the video data in the transport stream format can be played merely by installing this application in the information device capable of downloading the video data in the transport stream format. As a result, the video data downloaded in the transport stream format can be easily played by a variety of information devices.
[2] In accordance with a preferred embodiment according to the information device mentioned above, the controller is configured to perform video playback by using the local server to send the distribution data to the playback component while producing the distribution data.
   With this configuration, the video playback can be performed at faster timing for the user than when the video playback is performed after the production of distribution data.
[3] In accordance with a preferred embodiment according to any one of the information devices mentioned above, the controller is configured to delete from the memory the distribution data for a period more than a specific length of time prior to a video playback location while performing video playback.
   With this configuration, the distribution data for a period more than the specific length of time prior to the video playback location can be deleted from the memory. Thus, the video can be played (streamed) even if there is not enough free data capacity in the memory.
[4] In accordance with a preferred embodiment according to any one of the information devices mentioned above, the controller is configured to delete from the memory the distribution data after playing the distribution data.
[5] In accordance with a preferred embodiment according to any one of the information devices mentioned above, the controller is configured to download from an external device the video data for a specific length of time after a video playback location while performing video playback.
   With this configuration, the data capacity of the memory used for the video playback can be less than a predetermined data capacity. Thus, the video can be played (streamed) even if there is not enough free data capacity in the memory.
[6] In accordance with a preferred embodiment according to any one of the information devices mentioned above, the controller is configured to produce the distribution data which includes divided data obtained by dividing up the video data, and playback list data for playing the divided data.
   With this configuration, the information device comprises configuration that is configured to distribute the divided data and the playback list data for playing the divided data. Thus, the video can be played by HLS (HTTP live streaming) format.
[7] In accordance with a further preferred embodiment according to the information device mentioned above for producing the distribution data with the divided data and the playback list data, the controller is configured to produce the playback list data in the distribution data such that the playback list data includes playback order of the divided data and a URL indicating a storage location of the divided data.
[8] In accordance with a further preferred embodiment according to any one of the information devices mentioned above for producing the distribution data with the divided data and the playback list data, the controller is configured to acquire the playback list data from the local server, configured to refer to a URL indicating a storage location of the divided data based on the playback list data, and configured to acquire the divided data from the local server.
[9] In accordance with a preferred embodiment according to any one of the information devices mentioned above, the controller is configured to produce the distribution data which includes single video data, and playback list data for playing the single video data.
[10] In accordance with a preferred embodiment according to any one of the information devices mentioned above for producing distribution data with divided data/single video data and the playback list data, the controller is configured to write dummy data at end of the playback list data in addition to the divided data. The dummy data is free of the video data.
   Here, if the video playback is performed with all of the divided data that has been produced, then the controller generally determines that the video playback is complete for all of the video (the entire content), and ends the video playback. That is, it is concluded that there is no further divided data to be played (NOT FOUND), and the video playback is ended. Also, if the playback of all the divided data written to the playback list data (the entire content) is not completed, then the controller puts the system in a standby state (WAIT), without ending the video playback. Furthermore, if the network line is not working properly and no further divided data to be played is found in the playback list data for a continuous specific length of time, then the controller may sometimes mistakenly come to a conclusion of NOT FOUND, and end up ending the video playback. In view of this, with the above configuration, the dummy data can be used to determine that there is further divided data to be played from the playback list data. This prevents the controller from mistakenly determining that the data is NOT FOUND and ending the video playback.
[11] In accordance with a further preferred embodiment according to any one of the information devices mentioned above for producing distribution data with divided data/single video data and the playback list data, the controller is configured not to write the dummy data to the playback list data when the playback list data indicates end of the video data.
   In other words, the controller is configured to determine if the playback list data indicates end of the video data, and otherwise write the dummy data to the playback list data.
[12] In accordance with a further preferred embodiment according to any one of the information devices mentioned above for producing distribution data with divided data/single video data and the playback list data, with a configuration in which the distribution data includes the divided data and the playback list data, the controller is configured to halt production of the divided data and production of the playback list data when time information affixed at a predetermined period for each predetermined data amount of the video data distributed from the external device is discontinuous. The controller is configured to start production of the divided data and production of another playback list data for the video data to which discontinuous time information is affixed.
   If there are discontinuous time information (time stamps), then this configuration avoids the occurrence of the video playback problems (errors such as the video playback being unable to be performed) caused by continuing the productions of the divided data and the playback list data.
[13] In accordance with a preferred embodiment according to any one of the information devices mentioned above, the controller is configured to produce thumbnail images based on the distribution data while performing video playback by using the local server to send the distribution data.
   With this configuration, the user can perform a seek operation while visually grasping the content of the video from the thumbnail images. Therefore, the user can easily access a specific desired playback location.
[14] In accordance with a preferred embodiment according to any one of the information devices mentioned above, the controller is configured to produce the distribution data while downloading the video data.
[15] In accordance with a preferred embodiment according to any one of the information devices mentioned above, the controller is configured to produce the distribution data after downloading the video data.
[16] In accordance with a preferred embodiment according to any one of the information devices mentioned above, the controller is configured to produce the playback list data by sequentially writing the URL for the divided data while producing the divided data.
[17] In accordance with a preferred embodiment according to any one of the information devices mentioned above, the information device further comprises a second memory configured to store the downloaded video data.
[18] In accordance with a preferred embodiment according to any one of the information devices mentioned above, the controller is configured to produce a table to convert between time information and data volume of the video data.
[19] In accordance with a preferred embodiment according to any one of the information devices mentioned above, the controller is configured to download the video data which has transport stream format.
[20] In accordance with a preferred embodiment according to any one of the information devices mentioned above, the controller is configured to produce the distribution data such that the distribution data has HTTP Live Streaming format.

As discussed above, with the information device, the video data downloaded in the transport stream format can be played without being converted to another format.

### Brief Description of the Drawings

Referring now to the attached drawings which form a part of this original disclosure:
FIG. 1 is a block diagram of the overall configuration of a communication network system that includes an information device pertaining to a first embodiment;
FIG. 2 is a diagram illustrating division of video data in HLS format;
FIG. 3 shows a diagram illustrating playback list data;
FIG. 4 shows a screen shot illustrating an application for establishing communication with an external device on the information device pertaining to the first embodiment;
FIG. 5 shows a screen shot illustrating the application on which is displayed a list of videos recorded to the external device on the information device pertaining to the first embodiment;
FIG. 6 is a diagram illustrating deletion and download of video data by a controller of an information device pertaining to a second embodiment;
FIG. 7 is a diagram illustrating processing when a controller produces dummy data while a network line is not working properly in an information device pertaining to a third embodiment;
FIG. 8 is a diagram illustrating processing when no dummy data is produced while a network line is not working properly;
FIG. 9 shows a screen shot illustrating an application on which are displayed thumbnail images in an information device pertaining to a fourth embodiment;
FIG. 10 is a diagram illustrating production of divided data and playback list data by a controller of an information device pertaining to a fifth embodiment;
FIG. 11 is a block diagram of the overall configuration of a communication network system that includes an information device pertaining to a sixth embodiment; and
FIG. 12 is a time byte conversion table pertaining to the sixth embodiment.

### Detailed Description of Preferred Embodiments

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

### FIRST EMBODIMENT

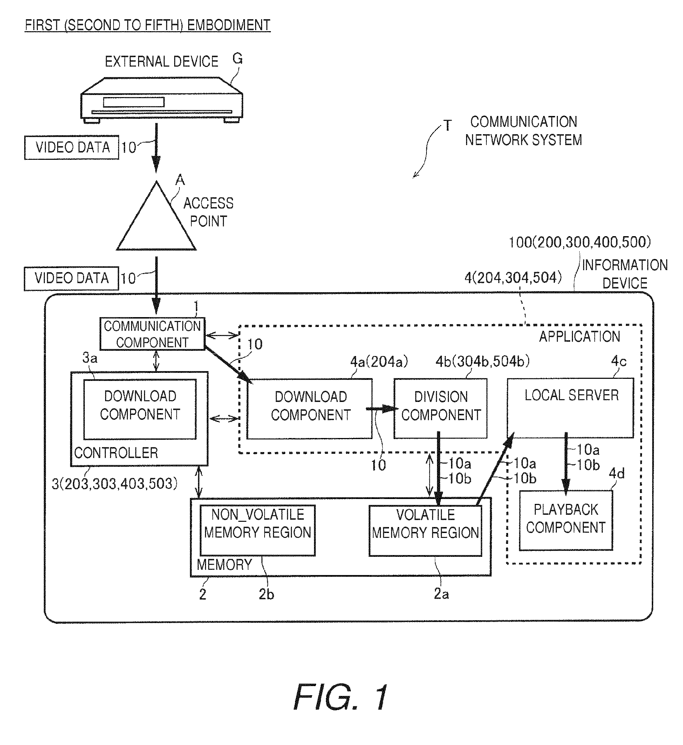

First, the configuration of an information device 100 pertaining to the first embodiment will be described through reference to FIGS. 1 to 5.

As shown in FIG. 1, the information device 100 pertaining to the first embodiment functions as an element of a communication network system T. The communication network system T includes an access point A, an external device G, and the information device 100. The communication network system T is configured to allow playback with the information device 100 by distributing (sending) video data 10 recorded by the external device G through the access point A.

The access point A is configured to allow the external device G and the information device 100 to communicate with each other by wire or wirelessly. That is, the access point A relays communication between the external device G and the information device 100 within the communication network system T.

The external device G is configured to store (record) a digital broadcast as the video data 10 in transport stream format. Also, when a distribution request is received from the information device 100, the external device G is configured to distribute the stored (recorded) video data 10 in the transport stream format to the information device 100 through the access point A. An example of the external device G is a Blu-ray disc recorder. However, the external device G is not limited to this, and can be different device that distribute the video data 10.

### Configuration of Information Device

As shown in FIG. 1, the information device 100 comprises a communication component 1, a memory 2, and a controller 3. Examples of the information device 100 include a smart phone and a tablet terminal. However, the information device 100 is not limited to this, and can be different device that plays the video data 10. An application 4 for video playback is executed by the controller 3. In other words, the controller 3 function as and constitutes an application component (i.e. the application 4) which is configured to play or reproduce video data. The application 4 is installed in the information device 100. The application 4 is configured to perform the video playback in HLS (HTTP live streaming) format. An OS (operating system) capable of play HLS format video is installed in the information device 100. Examples of this OS include iOS 3.0 ("iOS" is a registered trademark), as well as Android^{®} and Safari 4.0 ("Safari" is a registered trademark). Of course, the OS is not limited to this.

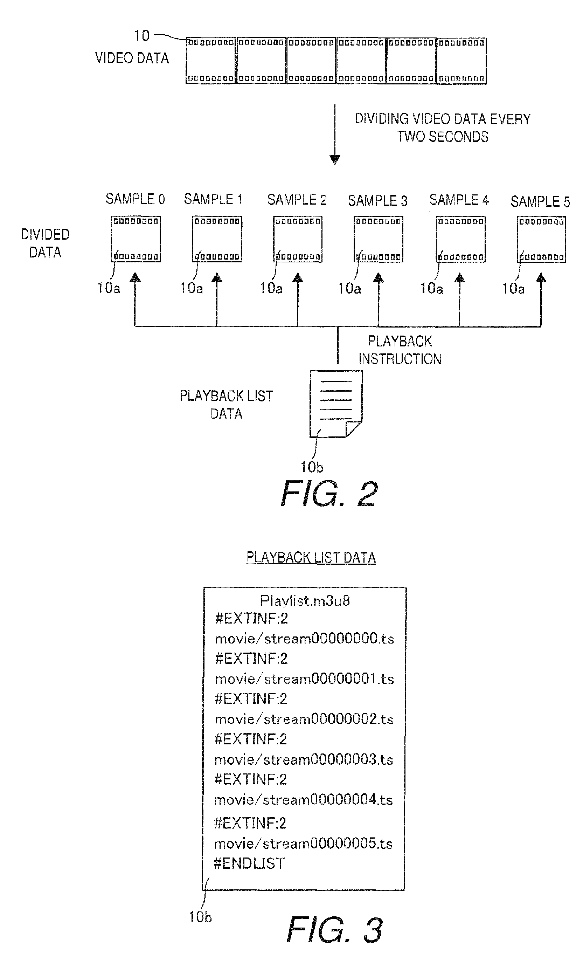

The HLS format is a format with divided data 10a and playback list data 10a. In the HLS format, the divided data 10a includes different files or segments into which the entire video, such as the video data 10, is divided. The segments of the divided data 10a are units of a few seconds, and can have equal length. The divided data 10a is registered on a Web server. Also, in the HLS format, a reception device refers to a URL (uniform resource locator) indicating the storage site of the divided data 10a. The URL is written in the playback list data 10b (see FIG. 3). The playback list data 10b is an index file, such as an m3u8 file, that contains references (URL) of the divided data 10a. In the HLS format, the segments of the divided data 10a are continuously acquired for video playback. In the illustrated embodiment, the divided data 10a is produced by merely dividing the video data 10 into the segments of the divided data 10a. In other words, the application 4 (the division component 4b (described below)) merely divides the MPEG-2 TS file (the video data 10) into the segments (the divided data 10a). Thus, this division of the video data 10 does not require the conversion of the video format itself, such as conversion from the transport stream format (MPEG-2 TS) to the MP4 format. In other words, the divided data 10a is kept as the MPEG-2 TS file.

The video playback in the HLS format is generally performed as follows. First, as shown in FIG. 2, a device on the distribution side (a recorder or other external device) produces the divided data 10a by dividing up the video data 10. This device also produces the playback list data 10b by writing the playback order in which the divided data 10a is produced. After a device on the reception side (a smart phone or other playback device) downloads the playback list data 10b, the video playback is performed according to the playback list data 10b. Specifically, this device sequentially downloads the divided data 10a by referring to the URL of the device on the distribution side written in the playback list data 10b (or by receiving network distribution of the divided data 10a), and then sequentially plays the divided data 10a. That is, the order in which the divided data 10a is played is written to the playback list data 10b.

Meanwhile, as shown in FIG. 1, the information device 100 in the first embodiment is configured to produce the playback list data 10b and the divided data 10a in the transport stream format (see FIG. 3) from the video data 10 with the application 4 in the information device 100, rather than in the external device G. The information device 100 also play the video by performing pseudo network distribution (transmission) of the divided data 10a based on the playback list data 10b that is produced. The method for playing (processing) the video will be described in detail below.

The communication component 1 is configured to communicate with the external device G that distributes the video data 10 in the transport stream format. More precisely, the communication component 1 is configured to receive (download) the distribution of the video data 10 from the external device G under the control of the controller 3 of the information device 100 when there is a request for video playback or video distribution. The request is performed by designating a specific URL that includes the IP (Internet protocol) address of the external device G within the communication network system T. The communication component 1 is formed by a conventional communication device or circuit well known in the art. Thus, detailed description of the communication component 1 will be omitted.

The memory 2 is configured to store the divided data 10a and the playback list data 10b. The divided data 10a and the playback list data 10b form distribution data that is produced from the video data 10 with the application 4. The memory 2 is also configured to store the distributed or downloaded video data 10 directly as it is.

More precisely, the memory 2 includes a volatile memory region 2a and a non-volatile memory region 2b. The volatile memory region 2a is configured to store the divided data 10a and the playback list data 10b produced from the video data 10. A local server 4c (discussed below) of the application 4 is configured to acquire the divided data 10a and the playback list data 10b from the volatile memory region 2a when the video playback is performed. The non-volatile memory region 2b is configured to store the downloaded video data 10 directly as it is. The downloaded video data 10 is downloaded through the communication component 1. The memory 2 can include a conventional memory, which is well known in the art, as needed and/or desired. For example, the memory 2 can include a ROM (Read Only Memory) device or flash memory as the non-volatile memory region 2b and a RAM (Random Access Memory) device as the volatile memory region 2a. The RAM can store statuses of operational flags and various data, such as detection results. The ROM can store control programs for various operations of the controller 3.

The controller 3 has the function of controlling the various components of the information device 100. The controller 3 includes a CPU (central processing unit), or other processers (microcomputers). The controller 3 can also include other conventional components such as an input interface circuit, an output interface circuit, and storage devices such as an internal ROM device and an internal RAM device. The controller 3 is programmed to control the various component of the information device 100. It will be apparent to those skilled in the art from this disclosure that the precise structure and algorithms for controller 3 can be any combination of hardware and software that will carry out the functions of the present invention. The controller 3 is also configured to execute the application 4 in order to perform the video playback on the information device 100. Also, the controller 3 is configured to constitute the local server 4c (discussed below) within the application 4 by executing the application 4. Also, the controller 3 is configured to distribute the divided data 10a and the playback list data 10b (pseudo network distribution (transmission)) stored in the volatile memory region 2a of the memory 2, from the local server 4c to a playback component or means 4d (discussed below) within the application 4. The playback component 4d is an example of the "playback component" in the present disclosure.

The controller 3, by executing the application 4, is configured to produce the divided data 10a and the playback list data 10b from the video data 10 with a division component or means 4b (discussed below) of the application 4. The controller 3, by executing the application 4, is also configured to perform the video playback by distributing (transmitting) the divided data 10a and the playback list data 10b to the playback component 4d (discussed below) with the local server 4c (discussed below) of the application 4 while producing the divided data 10a and the playback list data 10b.

The controller 3 has a download component or means 3a. The download component 3a is configured to download the video data 10 from the external device G through the communication component 1. The download component 3a is configured to store the downloaded video data 10 in the non-volatile memory region 2b of the memory 2. When the video data 10 is downloaded from the download component 3a, the download component 4a (discussed below) of the application 4 does not download the video data 10. Also, the controller 3 is configured to delete the divided data 10a and playback list data 10b stored in the volatile memory region 2a of the memory 2 once the video playback is complete.

The application 4 has the download component or means 4a (e.g., downloader), the division component or means 4b (e.g., segmenter), the local server 4c, and the playback component 4d (e.g., player). As mentioned above, the application 4 is executed by the controller 3. In other words, the components of the application 4, such as the download component 4a, the division component 4b, the local server 4c and the playback component 4d, are formed configured by the CPU or processor of the controller 3. Thus, although the controller 3 and the application 4 are illustrated as separate parts in FIG. 1, the processing of the controller 3 and the application 4 can be performed in the same hardware, such as the CPU or processor. Thus, in the following disclosure, the processing performed by the components of the application 4 is also performed by the controller 3.

The download component 4a is configured to download the video data 10 from the external device G through the communication component 1 when the application 4 is executed by the controller 3. The download component 4a is also configured to send the downloaded video data 10 to the division component 4b when the application 4 is executed by the controller 3. When the video data 10 is downloaded from the download component 4a, the download component 3a of the controller 3 does not download the video data 10.

The division component 4b is configured to produce the divided data 10a by dividing up the video data 10 downloaded by the download component 4a. The division component 4b is also configured to produce the playback list data 10b for playing the divided data 10a. For example, the division component 4b is configured to sequentially produce the divided data 10a corresponding to segments of the video data of a playback time of two seconds one at a time. The division component 4b is also configured to sequentially write or register the divided data 10a thus produced to the playback list data 10b. As shown in FIG. 3, the division component 4b writes the reference or URL of the divided data 10a to the playback list data 10b. Also, the division component 4b is configured to send the divided data 10a and playback list data 10b thus produced to the volatile memory region 2a of the memory 2.

The local server 4c (e.g., pseudo-distribution component or means) is configured to acquire the playback list data 10b from the volatile memory region 2a, and send it to the playback component 4d. Also, the local server 4c is configured to perform the pseudo network distribution (transmission) of the divided data 10a toward the playback component 4d within the application 4 when the playback component 4d refers to the specific URL indicating storage site of the volatile memory region 2a of the memory 2 based on the playback list data 10b.

The playback component 4d is configured to acquire the playback list data 10b from the local server 4c. Also, the playback component 4d is configured to receive the pseudo network distribution of the divided data 10a from the local server 4c in response to referring to the specific URL based on the playback list data 10b.

### Video Playback Processing

The video playback processing (method) performed by the controller 3 (the application 4) will now be described.

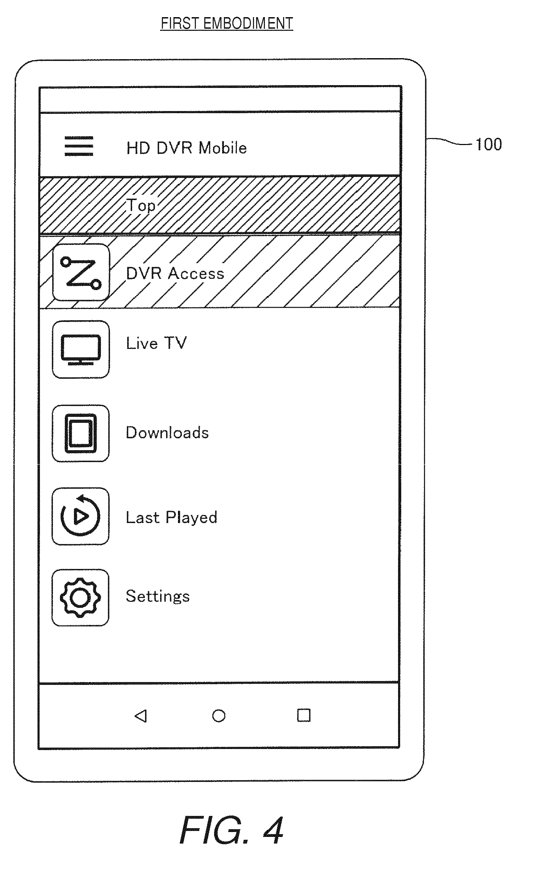

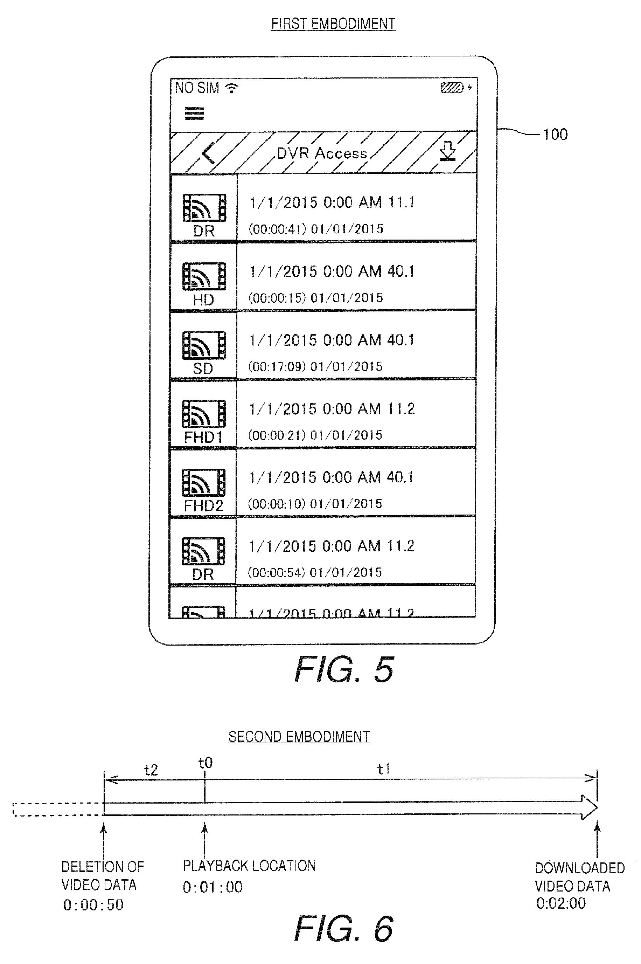

As shown in FIG. 1, the controller 3 of the information device 100 executes the application 4 to access a DVR (digital video recorder) when the user operates the screen of the application 4 as shown in FIG. 4, for example. Specifically, in response to the operation, communication is established between the information device 100 and the external device G. The user then selects a video to be played from a list of the video data 10 recorded to the external device G. The list of the video data 10 is displayed on the screen of the information device 100, as shown in FIG. 5. With this operation, the playback component 4d sends a distribution request (playback request) for the video data 10 to the external device G, for example.

As shown in FIG. 1, the video data 10 is then downloaded by the download component 4a of the application 4 through the communication component 1. This download is continued while performing the video playback. Furthermore, the downloaded video data 10 is divided up by the division component 4b of the application 4 to produce the divided data 10a. Simultaneously with the production of the divided data 10a, the playback list data 10b is produced, which includes a list of the reference or URL of the divided data 10a. The production of the divided data 10a is continued while downloading the video data 10 from the external device G. Also, the playback list data 10b thus produced continues to be updated while downloading the video data 10 from the external device G. Specifically, the reference or URL of the newly produced divided data 10a is additionally written to the list of the playback list data 10b.

The divided data 10a and playback list data 10b thus produced are stored in the volatile memory region 2a of the memory 2. The playback component 4d then refers to the specific URL based on the playback list data 10b, causing the divided data 10a to be pseudo network distributed from the local server 4c to the playback component 4d. With the information device 100, the divided data 10a is sequentially produced while downloading the video data 10 from the externa device G. Also, the playback list data 10b is continuously updated while downloading the video data 10 and producing the divided data 10a. With the information device 100, the playback component 4d reads the playback list data 10b from the memory 2 once every predetermined time interval to determine if the playback list data 10b is updated. If the playback component 4d determines that the playback list data 10b is updated, then the playback component 4d refers to the added URL to download and play the newly added divided data 10a. As a result, the video is played by the playback component 4d. The speed at which the video data 10 is downloaded by the download component 4a (the speed at which the divided data 10a is produced) is higher than the speed at which the video (the divided data 10a) is played by the playback component 4d. Also, once the playback of the entire video (one whole content) is complete, etc., the divided data 10a and the playback list data 10b stored in the volatile memory region 2a of the memory 2 are deleted. In particular, in the illustrated embodiment, the controller 3 is configured to delete from the memory 2 the distribution data after playing the distribution data.

### Effect of First Embodiment

The following effect is obtained with the first embodiment.

As discussed above, in the first embodiment, the information device 100 comprises the communication component 1, the controller 3, and the memory 2. The communication component 1 communicates with the external device G. The controller 3 is configured to control the download of the video data 10 in the transport stream format from the external device G through the communication component 1. The controller 3 is configured to produce the playback list data 10b and the divided data 10a of the same format as the video data 10 from the downloaded video data 10. The controller 3 is also configured to execute the application 4 that plays the divided data 10a by producing the divided data 10a in the transport stream format and the playback list data 10b from the downloaded video data 10. The memory 2 is configured to store the divided data 10a and the playback list data 10b. The controller 3 is configured to constitute the local server 4c within the application 4. The controller 3 is configured to send the divided data 10a and the playback list data 10b that are stored in the memory 2 from the local server 4c to the playback component 4d in the application 4. Consequently, the pseudo-transmission (streaming) of the video is performed from the local server 4c with the application 4 by producing the playback list data 10b and the divided data 10a in the same format from the video data 10 that is in the transport stream format and is downloaded by the communication component 1. Thus, the information device 100 can perform streaming playback of the video data 10 downloaded by the transport stream format without converting the video data 10 to another format. Also, the video data 10 does not need to be converted. Thus, this saves the user the trouble of having to convert the video data 10. Also, when the video playback is performed simultaneously with the download of the video data 10 from the external device G, it is not necessary for the conversion of the video data 10 to be performed simultaneously with the video playback. Thus, the processing load on the controller 3 can be reduced. Also, the video data 10 in the transport stream format can be played in the same format by executing the application 4. Thus, the video data 10 can be played in the transport stream format merely by installing the application 4 in the information device 100 capable of downloading the video data 10 in the transport stream format. As a result, the video data 10 that is downloaded in the transport stream format can be easily played by a variety of information devices 100. Also, the video can be played in the HLS (HTTP live streaming) format by producing and transmitting the divided data 10a and the playback list data 10b.

Also, in the first embodiment, as discussed above, the controller 3 is configured to perform the video playback by using the local server 4c to send the divided data 10a and the playback list data 10b while producing the divided data 10a and the playback list data 10b. Consequently, the video can be played at a faster timing than when the video is played subsequent to the production of the divided data 10a and the playback list data 10b.

### SECOND EMBODIMENT

The configuration of an information device 200 pertaining to a second embodiment will now be described through reference to FIGS. 1 and 6. With the information device 100 pertaining to the first embodiment, the divided data 10a stored in the volatile memory region 2a of the memory 2 is deleted once the playback of the entire video (one whole content) is complete. On the other hand, the information device 200 pertaining to the second embodiment deletes the divided data 10a stored in the volatile memory region 2a of the memory 2 while performing the video playback.

As shown in FIG. 1, the information device 200 pertaining to the second embodiment comprises the communication component 1, the memory 2, and a controller 203. An application 204 for video playback is executed by the controller 203. The application 204 is installed in the information device 200. The application 204 has a download component or means 204a (e.g., downloader), the division component or means 4b (e.g., segmenter), the local server 4c, and the playback component or means 4d (e.g., player).

The controller 203 is configured to use the download component 204a of the application 204 to download the video data 10 from the external device G while performing the video playback of the video data 10. Specifically, the download component 204a downloads the video data 10 for a specific time length t1 (e.g., specific length of time) after a playback location t0 of the video data 10. In the illustrated embodiment, for example, as shown in FIG. 6, the controller 203 (see FIG. 1) is configured to download the video data 10 for one minute (t1 = 60 seconds) after the video playback location t0 while performing the video playback. That is, if the playback location is 1:00 (e.g., one minute from the start of the video data 10), then the controller 203 is configured to download the video data 10 for a period from the playback location of 1:00 to the playback location of 2:00 (e.g., two minutes from the start of the video data 10). Therefore, the controller 203 uses the download component 204a of the application 204 to download the video data 10 while constantly monitoring the current video playback location t0. Of course, "one minute" is merely an example of the specific time length t1. Thus, the specific time length t1 can be a different value.

The controller 203 is configured to delete the divided data 10a for a period more than a specific time length t2 (e.g., specific length of time) prior to the video playback location t0 from the volatile memory region 2a of the memory 2 (see FIG. 1) while performing the video playback. For example, as shown in FIG. 6, the controller 203 (see FIG. 1) is configured to delete the divided data 10a for a period more than 10 seconds (t2 = 10 seconds) prior to the video playback location t0. That is, if the playback location is 1:00 (e.g., one minute from the start of the video data), then the controller 203 is configured to delete the divided data 10a up to a playback location of 0:50 (e.g., 50 seconds from the start of the video data). In other words, the divided data 10a for a period from 0:00 (the start) to 0:50 (50 seconds) is deleted from the memory 2. Of course, "10 seconds" is merely an example of the specific time length t2. Thus, the specific time length t2 can be a different value. Therefore, the controller 203 deletes the divided data 10a from the volatile memory region 2a of the memory 2 while constantly monitoring the current video playback location t0. In the second embodiment, with these controls by the controller 203, the amount of data stored in the volatile memory region 2a during the video playback of the video data 10 can be reduced to only the part corresponding to the video data 10 for a time period of (t1 + t2).

The rest of the configuration in the second embodiment is the same as that in the first embodiment.

### Effect of Second Embodiment

The following effect is obtained with the second embodiment.

In the second embodiment, just as in the first embodiment above, the controller 203 is provided to control the download of the video data 10 in the transport stream format from the external device G through the communication component 1. The controller 203 is configured to produce the divided data 10a in the transport stream format and the playback list data 10b from the downloaded video data 10. With this configuration, the controller 203 is configured to execute the application 204 that plays the divided data 10a. The controller 203 is configured to constitute the local server 4c within the application 204. The controller 203 is configured to send the divided data 10a and the playback list data 10b that are stored in the memory 2 from the local server 4c to the playback component 4d in the application 204. Consequently, the video data 10 downloaded in the transport stream format in the information device 200 can be played without being converted to another format.

Also, in the second embodiment, as discussed above, the controller 203 is configured to delete from the memory 2 the divided data 10a (e.g., the distribution data) for the period more than the specific length of time prior to the video playback location while performing the video playback. Consequently, the divided data 10a for the period more than the specific length of time prior to the video playback location can be deleted from the memory 2. Thus, the video can be played (streamed) even if there is not enough empty data capacity in the memory 2.

Also, in the second embodiment, as discussed above, the controller 203 is configured to download from the external device G the video data 10 for the specific length of time after the video playback location while performing the video playback. Consequently, the data capacity of the memory 2 used for the video playback can be less than a specific data capacity. Thus, the video can be played (streamed) even if there is not enough empty data capacity in the memory 2.

### THIRD EMBODIMENT

The configuration of an information device 300 pertaining to the third embodiment will now be described through reference to FIGS. 1, 7, and 8. In the third embodiment, the information device 300 is basically the same as the information device 100 in the first embodiment, in which the produced divided data 10a (data including the video or the video data 10) is sequentially written to the playback list data 10b. The information device 300 also writes dummy data 10c at the very end of the playback list data 10b. The dummy data 10c is free of any video or video data 10, and does not include any video or video data 10.

As shown in FIG. 1, the information device 300 pertaining to the third embodiment comprises the communication component 1, the memory 2, and a controller 303. An application 304 for video playback is executed by the controller 303. The application 304 is installed in the information device 300. The application 304 has the download component or means 4a (e.g., downloader), a division component or means 304b (e.g., segmenter), the local server 4c, and the playback component or means 4d (player).

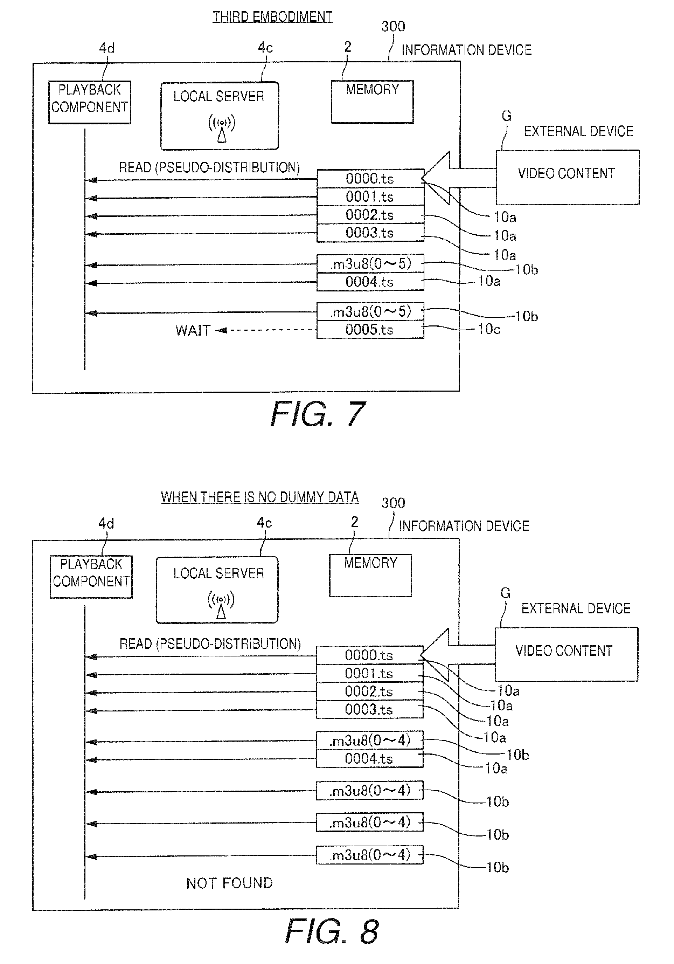

As shown in FIG. 7, the controller 303 is configured to write the reference of the divided data 10a (data that does include the video data 10) to the playback list data 10b by means of the division component 304b of the application 304. The controller 303 is also configured to write the dummy data 10c (data that includes no video data 10) at the very end of the playback list data 10b by means of the division component 304b of the application 304.

The reason for thus writing the dummy data 10c at the very end of the playback list data 10b will be briefly described through reference to FIGS. 7 and 8. FIG. 8 illustrates the operation when there is no dummy data 10c in the playback list data 10b. As mentioned above, the divided data 10a is sequentially produced and the playback list data 10b is updated while downloading the video data 10 from the externa device G. Basically, if the playback list data 10b is not updated for a predetermined time period, such as 10 seconds, then the OS determines that the playback of all the divided data 10a for the video data 10 is complete and ends the video playback. Here, when a network line is not working properly, the download of the video data 10 slows down, which slows down the production of the divided data 10a and the production (update) of the playback list data 10b. In this case, even though all the video data 10 has not been downloaded, the controller wrongly determines that the playback of all the video data 10 is complete since there is no update of the playback list data 10b. Thus, if there is no dummy data 10c in the playback list data 10b, then the controller ends the video playback of the video data 10 when the video playback for all of the divided data 10a that has been produced is complete. In particular, when the video playback is performed using all of the divided data 10a that has been produced, then the controller determines that the transmission (or distribution) of all of the video data 10 is complete, and that the playback of the entire video content is complete. As a result, the controller ends up terminating the video playback. That is, the controller is configured to determine that the video playback processing should be ended since no other video to be played (divided data 10a) is found in the playback list data 10b (NOT FOUND). Furthermore, the controller comes up with a conclusion of NOT FOUND as a result of a number of attempts to perform the video playback with the divided data 10a written at the very end of the playback list data 10b for a predetermined length of time or for a predetermined number of times.

In view of this, with the information device 300 pertaining to the third embodiment, as shown in FIG. 7, the controller 303 writes the dummy data 10c at the very end of the playback list data 10b. Specifically, when the controller 303 (division component 304b) produces or updates the playback list data 10b, the controller 303 add the dummy data 10c, which is indicative of an additional reference of a segment of the divided data 10a that has not been produced yet, to the playback list data 10b indicative of the references of the segments of the divided data 10a that have been already produced. Also, the controller 303 is configured to come to a conclusion of a standby state (WAIT) when the segment of the divided data 10a has not yet been produced and has not found in the local server 4c, rather than readily coming to a conclusion of NOT FOUND. Thus, with the dummy data 10c, it is avoided that the controller 303 comes to a conclusion of NOT FOUND and ends up terminating the video playback. Rather, with the dummy data 10c, the controller 303 is configured to come to a conclusion of the standby state (WAIT) even when the segment of the divided data 10a indicated by the dummy data 10c has not yet been produced and has not found. On the other hand, the dummy data 10c is not written at the very end of the playback list data 10b at which the video playback ends (at the very end of a single piece of content). In other words, the controller 303 is not configured to write the dummy data 10c to the playback list data 10b when the playback list data 10b indicates end of the video data 10. The playback list data 10b indicates the end of the video data 10 when the playback list data 10b includes a reference or URL to a segment of the divided data 10a that corresponds or includes the end of the video data 10. For example, if the video data 10 has a total playback time of one hour, then the controller 303 is configured not to add the dummy data 10c to the end of the playback list data 10b that includes a reference or URL for a segment of the divided data 10a that corresponds to or includes a playback location of one hour from the start of the video data 10.

The rest of the configuration in the third embodiment is the same as that in the first embodiment.

### Effect of Third Embodiment

The following effect is obtained with the third embodiment.

In the third embodiment, just as in the first embodiment above, the controller 303 is provided to control the download of the video data 10 in the transport stream format from the external device G through the communication component 1. The controller 303 is configured to produce the divided data 10a in the transport stream format and the playback list data 10b from the downloaded video data 10. With this configuration, the controller 303 is configured to execute the application 304 that plays the divided data 10a. The controller 303 is configured to constitute the local server 4c within the application 304. The controller 303 is configured to send the divided data 10a and the playback list data 10b that are stored in the memory 2 from the local server 4c to the playback component 4d in the application 304. Consequently, the video data 10 downloaded in the transport stream format in the information device 300 can be played without being converted to another format.

In the third embodiment, as discussed above, the controller 303 is configured to write the dummy data 10c that does not include any video data 10, at the very end of the playback list data 10b, in addition to writing the references or URLs for the segments of the divided data 10a to the playback list data 10b. In general, when the video playback is performed for all of the divided data 10a that has been produced, the controller 303 ends the video playback upon determining that the playback of all of the video data 10 (one entire piece of content) is complete. That is, it ends the video playback when there is no more divided data 10a to be played (NOT FOUND) in the playback list data 10b. Also, if the playback of all of the divided data 10a (one entire piece of content) written to the playback list data 10b has not been completed, then the controller 303 goes into the standby mode (WAIT) without ending the video playback. Furthermore, if the network line is not working properly and no further divided data 10a to be played is found in the playback list data 10b for a continuous predetermined time period, then the controller 303 may sometimes mistakenly come to a conclusion of NOT FOUND, and end up ending the video playback. In view of this, with the above configuration, the dummy data 10c can be used for the controller 303 to determine that there is further divided data 10a to be played, which corresponds to the dummy data 10c, from the playback list data 10b. This prevents the controller 303 from mistakenly determining that the video data is NOT FOUND and ending the video playback before completing the video playback of the entire video data 10.

### FOURTH EMBODIMENT

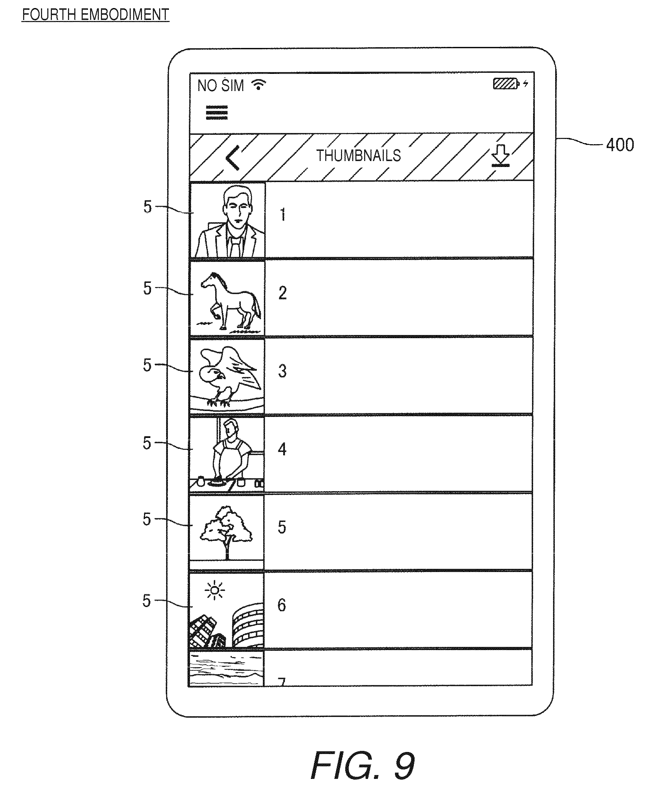

The configuration of an information device 400 pertaining to the fourth embodiment will now be described through reference to FIGS. 1 and 9. In the fourth embodiment, the information device 400 is basically the same as the information device 100 in the first embodiment. The information device 400 is also configured such that a controller 403 produces thumbnail images 5.

As shown in FIG. 1, the information device 400 pertaining to the fourth embodiment comprises the communication component 1, the memory 2, and the controller 403. The application 4 for video playback is executed by the controller 403. The application 4 is installed in the information device 400. The application 4 has the download component or means 4a (e.g., downloader), the division component or means 4b (e.g., segmenter), the local server 4c, and the playback component or means 4d (e.g., player).

The controller 403 is configured to produce the thumbnail images 5 (see FIG. 9) based on the divided data 10a (the video data 10) while performing the video playback by transmitting (pseudo-distribution) the divided data 10a and the playback list data 10b from the local server 4c. Specifically, the controller 403 is configured to use the playback component 4d to perform the video playback, and to acquire pixel data (image data) from the video (divided data 10a) that has been played back. Also, the controller 403 is configured to convert the acquired pixel data into an image file of a predetermined image format. For instance, the controller 403 is configured to covert the acquired pixel data into an image file in PNG format. The thumbnail images 5 are produced for each specific playback location (e.g., at predetermined time intervals in the video (the divided data 10a)).

The rest of the configuration in the fourth embodiment is the same as that in the first embodiment.

### Effect of Fourth Embodiment

The following effect is obtained with the fourth embodiment.

In the fourth embodiment, just as in the first embodiment above, the controller 403 is provided to control the download of the video data 10 in the transport stream format from the external device G through the communication component 1. The controller 403 is configured to produce the divided data 10a in the transport stream format and the playback list data 10b from the downloaded video data 10. With this configuration, the controller 403 is configured to execute the application 4 that plays the divided data 10a. The controller 403 is configured to constitute the local server 4c within the application 4. The controller 403 is configured to send the divided data 10a and the playback list data 10b that are stored in the memory 2 from the local server 4c to the playback component 4d in the application 4. Consequently, the video data 10 downloaded in the transport stream format in the information device 400 can be played without being converted to another format.

In the fourth embodiment, as discussed above, with the information device 400, the controller 403 is configured to produce the thumbnail images 5 based on the divided data 10a while performing the video playback by using the local server 4c to send the divided data 10a and the playback list data 10b. This allows the user to perform a seek operation while intuitively grasping the content of the video from the thumbnail images 5. Therefore, the user can easily access a desired playback location.

### FIFTH EMBODIMENT

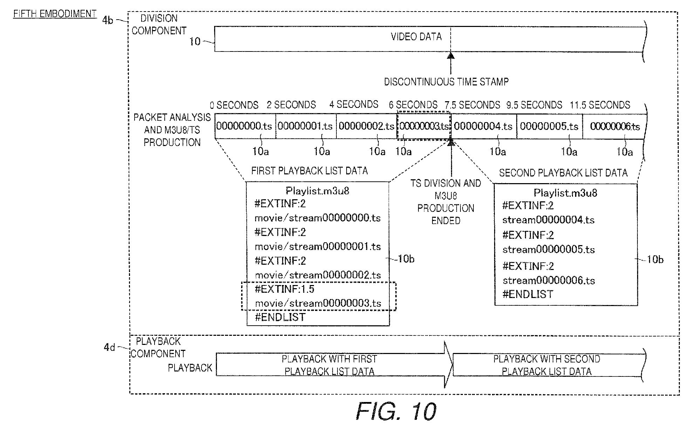

The configuration of an information device 500 pertaining to a fifth embodiment will now be described through reference to FIGS. 1 and 10. The information device 100 in the first embodiment, as mentioned above, constantly produces the divided data 10a corresponding to a predetermined playback time period, such as two seconds. On the other hand, the information device 500 produces the divided data 10a corresponding to the predetermined playback time period and a playback time period that is shorter in duration than the predetermined playback time period.

As shown in FIG. 1, the information device 500 pertaining to the fifth embodiment comprises the communication component 1, the memory 2, and a controller 503. An application 504 for video playback is executed by the controller 503. The application 504 is installed in the information device 500. The application 504 has the download component or means 4a (e.g., downloader), a division component or means 504b (e.g., segmenter), the local server 4c, and the playback component or means 4d (e.g., player).

The controller 503 is basically configured to check the time stamps affixed at every specific data amount of the video data 10 that is distributed (downloaded) from the external device G. The controller 503 is configured to sequentially produce segments of the divided data 10a each corresponding to the predetermined playback time period, such as two seconds (see FIG. 10) while the controller 503 determines that the time stamps are continuous. On the other hand, the controller 503 is configured to halt or complete the productions of the divided data 10a and the playback list data 10b by the division component 504b when the controller 503 determines that the time stamps are discontinuous. For example, as shown in FIG. 10, if the controller 503 (see FIG. 1) determines that the time stamp for the video data 10 is discontinuous (for example, the time stamp for the segment "movie/stream 00000003.ts" is discontinuous at 1.5 seconds), then the controller 503 first halts or completes the productions of the divided data 10a and the playback list data 10b by the division component 504b (see FIG. 1). Specifically, the controller 503 halts or complete the production of the divided data 10a after the segment "movie/stream 00000003.ts" which has discontinuous time stamp, and the production or update of the playback list data 10b after writing the reference to the segment "movie/stream 00000003.ts" in the playback list data 10b.

The "time stamp" here is time information affixed to every packet that is distributed (downloaded) from the external device G (see FIG. 1). Specifically, the time stamp is time information that is affixed to each packet of the video data 10 distributed from the external device G at a predetermined period for each predetermined data amount of the video data 10. For example, in the illustrated embodiment, the time stamp is affixed at the period of 27 MHz for each 188 bytes of the video data 10.

After the controller 503 halts or completes the productions of the divided data 10a and the playback list data 10b, the controller 503 (the division component 504b) commences another or subsequent productions of the divided data 10a and the playback list data 10b for the video data 10 to which a discontinuous time stamp has been affixed.

More specifically, if the controller 503 determines that the time stamp is discontinuous, such as the time stamp has moved from "100" to "102" by skipping "101", during the video playback, then the controller 503 first completes the productions of the divided data 10a and the playback list data 10b (e.g., first playback list data in FIG. 10) at the playback location where the time stamp is "100". After this, the controller 503 commences the productions of the divided data 10a and a new playback list data 10b (e.g., another or second playback list data in FIG. 10) at the playback location where the time stamp is "102". The controller 503 may commence the productions of the divided data 10a and the new playback list data 10b from the continuous time stamp "101" after first completing the productions of the divided data 10a and the playback list data 10b, so that the time stamps are not discontinuous.

The rest of the configuration in the fifth embodiment is the same as that in the first embodiment.

### Effect of Fifth Embodiment

The following effect is obtained with the fifth embodiment.

In the fifth embodiment, just as in the first embodiment above, the controller 503 is provided to control the download of the video data 10 in the transport stream format from the external device G through the communication component 1. The controller 503 is configured to produce the divided data 10a in the transport stream format and the playback list data 10b from the downloaded video data 10. With this configuration, the controller 503 is configured to execute the application 504 that plays the divided data 10a. The controller 503 is configured to constitute the local server 4c within the application 504. The controller 503 is configured to send the divided data 10a and the playback list data 10b that are stored in the memory 2 from the local server 4c to the playback component 4d in the application 504. Consequently, the video data 10 downloaded in the transport stream format in the information device 500 can be played without being converted to another format.

Also, in the fifth embodiment, as discussed above, the controller 503 is configured to first complete the productions of the divided data 10a and the playback list data 10b if the time stamps affixed at every specific data amount of the video data 10 distributed from the external device G become discontinuous. Then, the controller 503 is further configured to newly commence the productions of the divided data 10a and another playback list data 10b for the video data 10 where the discontinuous time stamp has been affixed. Consequently, problems for the video playback, such as the video being unable to play, caused by merely continuing the productions of the divided data 10a and the playback list data 10b while the time stamp is discontinuous can be avoided.

### SIXTH EMBODIMENT

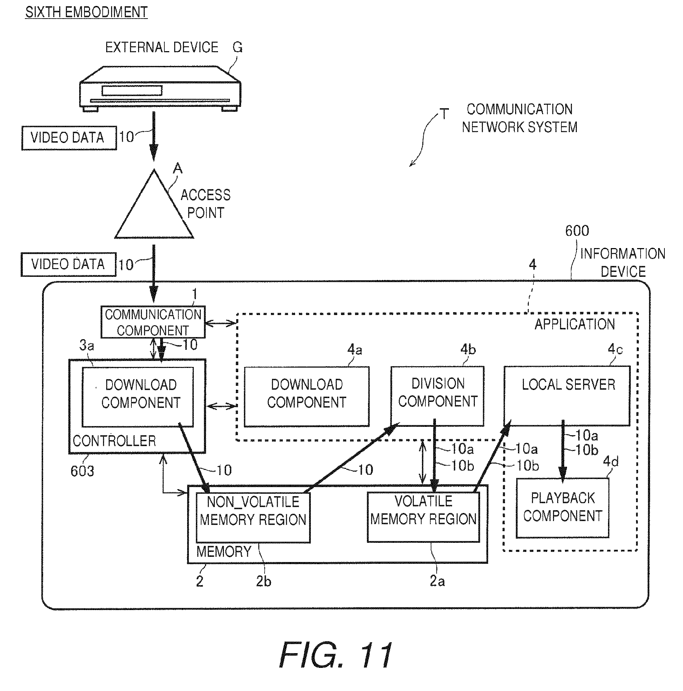

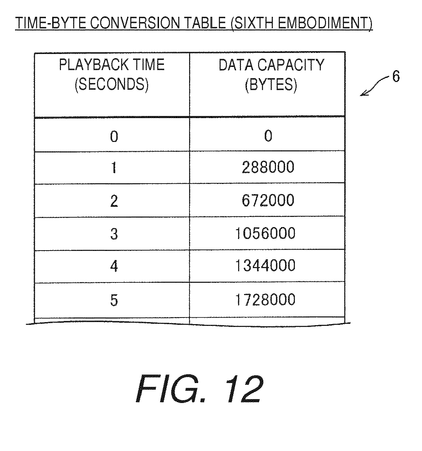

The configuration of an information device 600 pertaining to a sixth embodiment will now be described through reference to FIGS. 11 and 12. The information device 100 in the first embodiment, as mentioned above, performs the video playback in parallel with the download of the video data 10 from the external device G. Also, the information device 100 produces the divided data 10a and the playback list data 10b while downloading the video data 10. On the other hand, the information device 600 performs the video playback after first completing the download of all the video data 10 from the external device G.

As shown in FIG. 11, the information device 600 pertaining to the sixth embodiment comprises the communication component 1, the memory 2, and a controller 603. The application 4 for video playback is executed by the controller 603. The application 4 is installed in the information device 600. The application 4 has the download component or means 4a (e.g., downloader), the division component or means 4b (segmenter), the local server 4c, and the playback component or means 4d (e.g., player).

The controller 603 (the OS in the controller 603) has a download component or means 3a (e.g., downloader). The download component 3a is configured to download the video data 10 from the external device G through the communication component 1. The download component 3a is configured to store the downloaded video data 10 in the non-volatile memory region 2b (e.g., second memory) of the memory 2. The download component 3a of the controller 603 is configured to operate in the background of the information device 600 as well. That is, the download component 3a of the controller 603 will not be forced to end the download in the back ground while downloading the video data 10.

As shown in FIG. 12, the controller 603 is configured to produce a time-byte conversion table 6 upon completion of the download. The time-byte conversion table 6 is used to convert between time (a specific time stamp) and a data amount of the video data 10 when a video seek operation is performed (when the video playback is commenced from a specific playback location). For instance, the time-byte conversion table 6 is provided by a method in which data amount of one second's worth of data for each second of the playback time is sequentially added and stored to the time-byte conversion table 6. Consequently, with the time-byte conversion table 6, the playback location (seconds) and the data location (bytes) correspond to each other. Specifically, when the desired playback location (X seconds) is given, then the data location (bytes) corresponding to the desired playback location is acquired based on the time-byte conversion table 6 (the data after the X seconds' worth of data from the beginning).

The background operation of the division component 4b of the application 4 shown in FIG. 1 is sometimes restricted. Accordingly, the controller 603 is configured not to produce the divided data 10a and the playback list data 10b (by the division component 4b) in parallel with the download of the video data 10 from the external device G. Therefore, the controller 603 is configured not to perform the video playback in parallel with the download of the video data 10 from the external device G. In the illustrated embodiment, the controller 603 (division component 4b) produces the divided data 10a and the playback list data 10b after completing the download of the video data 10, and performs the video playback while producing the divided data 10a and the playback list data 10b.

The rest of the configuration in the sixth embodiment is the same as that in the first embodiment.

### Effect of Sixth Embodiment

The following effect is obtained with the sixth embodiment.

In the sixth embodiment, just as in the first embodiment above, the controller 603 is provided to control the download of the video data 10 in the transport stream format from the external device G through the communication component 1. The controller 603 is configured to produce the divided data 10a in the transport stream format and the playback list data 10b from the downloaded video data 10. With this configuration, the controller 603 is configured to execute the application 4 that plays the divided data 10a. The controller 603 is configured to constitute the local server 4c within the application 4. The controller 603 is configured to send the divided data 10a and the playback list data 10b that are stored in the memory 2 from the local server 4c to the playback component 4d in the application 4. Consequently, the video data 10 downloaded in the transport stream format in the information device 600 can be played without being converted to another format.

### Modification Examples

The embodiments disclosed herein are just examples in every respect, and should not be interpreted as being limiting in nature. The scope of the invention being indicated by the appended claims rather than by the above description of the embodiments, all modifications (modification examples) within the meaning and range of equivalency of the claims are included.

For instance, in the first to sixth embodiments above, the video playback is accomplished by producing the playback list data and also producing the divided data by dividing up the video data. However, but the present invention is not limited to this. With the present invention, the video playback may be accomplished by producing the playback list data without dividing up the video data. With this configuration, the controller produces the single video data without dividing up the video data and the playback list data for playing the single video data based on the downloaded video data.

Also, in the first to sixth embodiments above, the external storage device and the information device are configured to communicate via the access point. However, the present invention is not limited to this. With the present invention, the external storage device and the information device may be configured to communicate directly.

Also, in the first to sixth embodiments above, the divided data is made to correspond to the video data with a playback time period of two seconds. However, the present invention is not limited to this. With the present invention, the divided data may be made to correspond to the video data with a playback time period other than two seconds.

Also, in the first to sixth embodiments above, the video playback is performed in the HLS format. However, the present invention is not limited to this. With the present invention, as long as the video data in the transport stream format can be played while still in the same format (as long as the video data itself does not need to be converted to another format), the video playback may be performed in the format other than the HLS format.

Also, in the first to sixth embodiments above, the productions of the divided data and the playback list data are performed simultaneously with the video playback. However, but the present invention is not limited to this. With the present invention, the productions of the divided data and the playback list data may be performed at a different timing from that of the video playback.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims.

## Claims

1. An information device comprising:
a communication component configured to communicate with an external device;
a controller configured to download video data from the external device via the communication component, and configured to produce distribution data of the same format as the video data from the video data;
a memory configured to store the distribution data; and
an application including a local server and a playback component, and configured to play the distribution data,
the controller being configured to execute the application, and configured to send the distribution data stored in the memory from the local server to the playback component.

2. The information device according to claim 1, wherein
the controller is configured to perform video playback by using the local server to send the distribution data to the playback component while producing the distribution data.

3. The information device according to claim 1 or 2, wherein
the controller is configured to delete from the memory the distribution data for a period more than a specific length of time prior to a video playback location while performing video playback.

4. The information device according to any one of claims 1 to 3, wherein
the controller is configured to delete from the memory the distribution data after playing the distribution data.

5. The information device according to any one of claims 1 to 4, wherein
the controller is configured to download from the external device the video data for a specific length of time after a video playback location while performing video playback.

6. The information device according to any one of claims 1 to 5, wherein
the controller is configured to produce the distribution data which includes divided data obtained by dividing up the video data, and playback list data for playing the divided data.

7. The information device according to claim 6, wherein
the controller is configured to produce the playback list data in the distribution data such that the playback list data includes playback order of the divided data and a URL indicating a storage location of the divided data.

8. The information device according to claim 6 or 7, wherein
the controller is configured to acquire the playback list data from the local server, configured to refer to a URL indicating a storage location of the divided data based on the playback list data, and configured to acquire the divided data from the local server.

9. The information device according to any one of claims 1 to 5, wherein
the controller is configured to produce the distribution data which includes single video data, and playback list data for playing the single video data.

10. The information device according to any one of claims 6 to 9, wherein
the controller is configured to write dummy data at end of the playback list data in addition to the divided data, the dummy data being free of the video data.

11. The information device according to claim 10, wherein
the controller is configured not to write the dummy data to the playback list data when the playback list data indicates end of the video data.

12. The information device according to any one of claims 6 to 11, wherein
the controller is configured to halt production of the divided data and production of the playback list data when time information affixed at a predetermined period for each predetermined data amount of the video data distributed from the external device is discontinuous, and configured to start production of the divided data and production of another playback list data for the video data to which discontinuous time information is affixed.

13. The information device according to any one of claims 1 to 12, wherein
the controller is configured to produce thumbnail images based on the distribution data while performing video playback by using the local server to send the distribution data.

14. The information device according to any one of claims 1 to 13, wherein
the controller is configured to produce the distribution data while downloading the video data.

15. The information device according to any one of claims 1 to 13, wherein
the controller is configured to produce the distribution data after downloading the video data.
